# FASCICULE DE BREVET EUROPEEN

(11) **EP 2 450 256 B1**
(45) Date de publication et mention de la délivrance du brevet: **09.04.2014**
(21) Numéro de dépôt: 11186473.2
(22) Date de dépôt: 25.10.2011
(51) Int. Cl.: B62D 3/00, B62D 5/04, F16B 1/00, F16B 41/00

(54) **Système de direction avec témoin de démontage**
Lenksystem mit Demontageanzeige
Steering system with removal indicator

(30) Priorité: 03.11.2010 FR 1059041
(43) Date de publication de la demande: 09.05.2012
(73) Titulaire: Jtekt Europe, 69540 Irigny (FR)
(72) Inventeur: Pantale, David, 69126 BRINDAS (FR)
(74) Mandataire: Chevalier, Renaud Philippe

(56) Documents cités:
- DE-A1-102007 055 901
- US-A- 5 186 031
- US-B1- 6 406 074

## Description

La présente invention concerne, d'une manière générale, le domaine technique des systèmes de direction des véhicules automobiles. Plus particulièrement, cette invention s'intéresse à un système de direction avec témoin de démontage.

D'une manière généralement connue, un système de direction de véhicule automobile, manuel ou avec assistance motorisée, comprend un volant de conduite qui est lié en rotation à une colonne de direction, dont l'extrémité éloignée du volant porte un pignon en prise avec une crémaillère, montée coulissante dans un carter de direction. Les deux extrémités de la crémaillère, extérieures au carter, sont liées par l'intermédiaire de biellettes aux roues directrices, respectivement droite et gauche, du véhicule concerné. Ainsi, la rotation du volant, imprimée par le conducteur du véhicule, est transmise par la colonne de direction au pignon, et se trouve convertie en un mouvement de translation de la crémaillère, qui lui-même provoque l'orientation des roues directrices.

Dans le cas d'une direction à assistance électrique, la partie mécanique précédemment décrite est complétée par un moteur électrique d'assistance à deux sens de rotation, dont l'arbre de sortie est accouplé à un réducteur de vitesse à vis sans fin et roue tangente, ou à train d'engrenages, ou tout autre système de transmission. La sortie du réducteur est liée à la colonne de direction ou au pignon, ou directement à la crémaillère, de manière à transmettre un couple ou un effort moteur (éventuellement un couple ou un effort résistant) qui s'ajoute à celui exercé par le conducteur. Le moteur électrique d'assistance est piloté par un calculateur électronique, qui reçoit et traite divers signaux en provenance de capteurs, de manière à adapter le couple ou l'effort d'assistance aux conditions de chaque instant.

Un système de direction comporte aussi un certain nombre d'assemblages, à réaliser entre ses composants mécaniques fixes ou mobiles, ses éventuels composants électriques, et même ses composants électroniques ou informatiques (calculateur).

Le document de brevet DE 10 2007 055901 A1 montre un exemple de système de direction de véhicule automobile, avec plusieurs parties réunies par des assemblages comportant des boulons.

Les directions automobiles sont ainsi des systèmes de plus en plus complexes, utilisant des technologies diverses et délicates. Elles nécessitent en particulier des réglages précis lors de leur montage, ainsi que l'utilisation de logiciels spécifiquement développés. Tout démontage non professionnel risque d'altérer plus ou moins gravement la structure et le fonctionnement d'un tel système de direction.

Afin de se prémunir de tout acte de détérioration ou de malveillance, intentionnel ou non, touchant les composants d'une direction automobile, il est souhaitable qu'une direction ayant subi un démontage partiel ou complet puisse être immédiatement identifiée, en cas de retour de la direction pour défaut chez le constructeur automobile ou chez l'un de ses concessionnaires, ou chez le fournisseur initial du système de direction, ou chez tout autre intervenant.

Il est cependant nécessaire que la direction puisse être démontée après assemblage, et éventuellement après roulage du véhicule, par le constructeur ou le fournisseur ou par un garagiste agréé, afin de procéder à des réparations ou à des ajustements si cela s'impose.

Bien entendu, ceci concerne surtout les parties ou zones sensibles d'un système de direction, dans lesquelles une intervention inappropriée pourrait fortement dégrader la prestation de la direction d'un véhicule, ou même affecter la sécurité des utilisateurs du véhicule.

Face à cette problématique, la présente invention a pour but de fournir une solution simple et sûre, permettant de vérifier si un démontage d'une partie sensible ou donnant accès à une zone sensible a été fait, sans toutefois empêcher un démontage et un remontage par des personnes habilitées.

A cet effet, l'invention a pour objet un système de direction de véhicule automobile, comprenant au moins deux parties normalement réunies l'une à l'autre dans une zone d'assemblage, ce système de direction étant caractérisé par le fait qu'un témoin de démontage, sous la forme d'au moins un élément ruptible en cas de désassemblage des deux parties, est prévu dans la zone d'assemblage de ces deux parties.

Ainsi, le principe de l'invention consiste, dans les zones d'assemblage et notamment celles donnant accès à des zones sensibles des systèmes de direction, à prévoir un élément qui se rompt lors du démontage, et qui ne pourra en aucun cas être remis en place sans laisser une trace visuelle évidente de ce démontage. Cet élément ruptible, qui peut être une pièce en matière plastique, constitue donc un témoin de démontage, susceptible de signaler tout désassemblage intempestif. Le nombre de tels éléments est au minimum de un pour une zone d'assemblage à protéger, mais deux ou plusieurs témoins de démontage analogues peuvent être placés dans une même zone d'assemblage, pour une protection optimale et/ou pour faciliter une vérification visuelle en permettant celle-ci sous divers angles.

Le témoin de démontage est un élément additionnel qui complète l'assemblage de deux parties de la direction mais qui ne participe pas directement à cet assemblage. Ainsi, l'absence du témoin de démontage, notamment après un remontage du système de direction, n'empêchera pas le fonctionnement ultérieur de la direction.

Par contre, dans le cas d'une réclamation d'un utilisateur de véhicule pour dysfonctionnement de la direction, il sera aisé de vérifier, par le constat de l'absence d'un témoin, si un démontage a été fait dans une zone sensible du système de direction.

Divers modes de réalisation sont possibles pour l'élément ruptible constituant le ou chaque témoin de démontage, associé à une zone d'assemblage à protéger.

En particulier, le ou chaque témoin de démontage est réalisable sous la forme d'une pièce, notamment d'allure cylindrique, insérée dans deux trous coaxiaux ou sensiblement coaxiaux ménagés respectivement dans les deux parties se trouvant réunies dans la zone d'assemblage considérée, le témoin pouvant se présenter comme un élément ruptible du genre rivet.

L'élément ruptible constituant le témoin de démontage peut être réalisé d'un seul tenant, avec une courte tige passant au travers de trous traversants coaxiaux ou sensiblement coaxiaux ménagés respectivement dans les deux parties assemblées, la tige étant pourvue à chacune de ses extrémités d'une tête ou d'une butée de retenue. Lors d'un désassemblage, la seule solution pour séparer les deux parties consiste à rompre le témoin de démontage, au niveau de sa tige ou de l'une de ses têtes, et ce témoin ne pourra être remis correctement en place par la suite, ce qui constituera une preuve de démontage intempestif. Comme on le comprend, ce mode de réalisation nécessite, pour la mise en place initiale du témoin de démontage, une opération du genre bouterolage réalisée à l'une au moins des deux extrémités de la tige du témoin de démontage.

Dans un autre mode de réalisation, l'élément ruptible constituant le témoin de démontage, ici encore réalisé d'un seul tenant, possède une courte tige passant au travers d'un trou traversant ménagé dans l'une des parties assemblées, et introduite dans un trou de préférence borgne ménagé dans l'autre partie assemblée, la tige étant pourvue d'une tête à son extrémité située du côté de la partie pourvue du trou traversant, tandis que son extrémité opposée est clippée dans le trou de l'autre partie. L'élément ruptible formant témoin est ainsi plus simple à mettre en place. Aucun accès n'étant permis à l'extrémité dudit élément qui se trouve verrouillée dans le trou borgne, cet élément doit être rompu lors d'une tentative de désassemblage, ce qui lui permet de jouer le rôle de témoin de démontage.

Selon encore un autre mode de réalisation, l'élément ruptible constituant le témoin de démontage est composé de deux pièces complémentaires coaxiales, réunies par clippage au travers de deux trous traversants coaxiaux ou sensiblement coaxiaux ménagés respectivement dans les deux parties assemblées, chacune des deux pièces constitutives du témoin étant pourvue d'une tête à son extrémité extérieure. En cas de désassemblage, ces pièces doivent être séparées l'une de l'autre mais elles ne peuvent l'être que par rupture notamment dans la zone de clippage, ce qui rend leur remise en place impossible. Là aussi, la mise en place initiale de l'élément constituant témoin de démontage ne nécessite pas d'opération telle que bouterolage.

Selon un dernier mode de réalisation, l'élément ruptible constituant le témoin de démontage est constitué par au moins une pièce coiffant, complètement ou partiellement, les zones extérieures respectives des deux parties assemblées. Toute séparation de ces deux parties ne peut se faire qu'en rompant ou détruisant la pièce qui coiffe leurs bords respectifs adjacents.

Le témoin de démontage, objet de l'invention, est ainsi utilisable notamment dans la zone d'assemblage de deux parties de carter d'un système de direction, ces deux parties comportant des brides annulaires respectives qui sont accolées l'une à l'autre et par lesquelles elles sont assemblées l'une à l'autre :
- Dans le cas d'un témoin de démontage conformé en tige, ce témoin est mis en place dans des trous, coaxiaux ou sensiblement coaxiaux, ménagés dans les deux brides annulaires accolées.
- Dans le cas d'un témoin de démontage coiffant les zones extérieures des deux parties assemblées, le témoin coiffe ou pince les bords extérieurs des deux brides annulaires accolées.

L'invention sera mieux comprise à l'aide de la description qui suit, en référence au dessin schématique annexé représentant, à titre d'exemples, quelques formes d'exécution de ce système de direction avec témoin de démontage:
Figure 1 représente, de manière partielle et en coupe, une zone d'assemblage de deux parties d'un système de direction, avec un témoin de démontage selon une première forme de réalisation de l'invention ;
Figure 2 montre une variante du témoin de démontage de la figure 1 ;
Figure 3 représente, de manière partielle et en coupe, une zone d'assemblage de deux parties d'un système de direction, avec un témoin de démontage selon une deuxième forme de réalisation de l'invention ;
Figure 4 est une similaire à la figure 3, relative à une troisième forme de réalisation du témoin de démontage ;
Figure 5 est une similaire aux précédentes, relative à une quatrième forme de réalisation de ce témoin de démontage.

Sur les différentes figures, le dessin montre deux parties 2 et 3 d'un système de direction de véhicule automobile, représentées partiellement dans leur zone d'assemblage. Les deux parties 2 et 3 sont par exemple deux parties de carter qui entourent et protègent des organes internes du système de direction. Dans leur zone d'assemblage, ces deux parties 2 et 3 forment des brides annulaires qui sont accolées l'une à l'autre et sont assemblées entre elles, par exemple au moyen de boulons (non représentés).

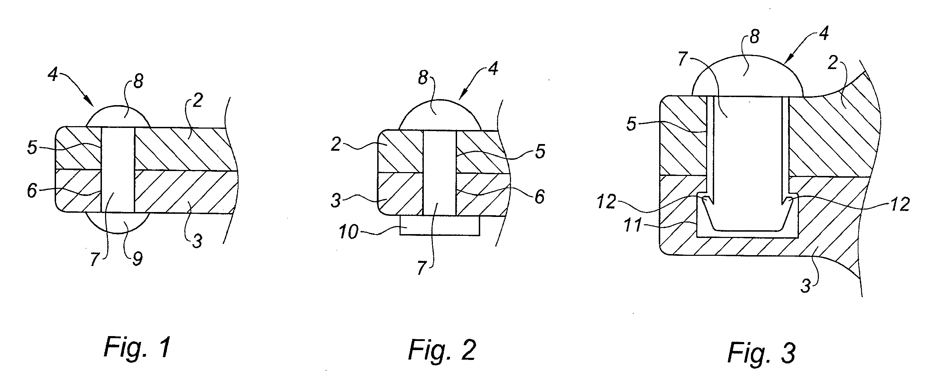

Selon l'invention, la zone d'assemblage comporte au moins un témoin de démontage, dont une première forme de réalisation est montrée sur la figure 1.

Le témoin de démontage 4 est mis en place dans deux trous cylindriques coaxiaux 5 et 6 traversants, ménagés respectivement dans les deux parties 2 et 3, plus particulièrement dans la zone d'assemblage de ces deux parties 2 et 3.

Le témoin de démontage 4 est constitué par un élément ruptible, en matière plastique, réalisé d'un seul tenant, cet élément comportant une courte tige cylindrique 7 passant au travers des deux trous 5 et 6. Une première extrémité de la tige 7 présente la forme d'une tête 8 élargie, de forme bombée, appliquée sur la partie 2. L'autre extrémité de la tige 7 présente elle aussi la forme d'une tête 9 élargie, de forme bombée, appliquée sur la partie 3. Au moins l'une des deux têtes 8 et 9 est formée par bouterolage à une extrémité de la tige 7.

Lors d'un démontage des deux parties 2 et 3, le témoin de démontage 4 se rompt, et il ne pourra être remis en place, ce qui apportera la preuve d'un démontage intempestif.

Dans une variante, montrée sur la figure 2, le témoin de démontage 4 est réalisé encore d'un seul tenant et il comporte une courte tige cylindrique 7 passant au travers de deux trous coaxiaux 5 et 6 traversants, ménagés dans la zone d'assemblage des deux parties 2 et 3. Une première extrémité de la tige 7 présente ici encore la forme d'une tête 8 élargie, de forme bombée, appliquée sur la partie 2. L'autre extrémité de la tige 7 forme une butée de retenue 10, d'allure anguleuse, arrêtée sur la partie 3. Le fonctionnement de cette variante est identique à celui du témoin de démontage 4 de la figure 1.

La figure 3 montre une deuxième forme de réalisation du témoin de démontage 4, comportant ici encore une courte tige cylindrique 7. Celle-ci passe au travers d'un trou traversant 5 de la partie 2, et s'introduit dans un trou borgne 11 de l'autre partie 3, les deux trous 5 et 11 étant coaxiaux. Une première extrémité de la tige 7 présente ici encore la forme d'une tête 8 élargie, de forme bombée, appliquée sur la partie 2. L'autre extrémité de la tige 7, engagée dans le trou borgne 11, possède des becs ou languettes 12 pour son clippage sur des formes complémentaires prévues sur la paroi du trou borgne 11. Le témoin de démontage 4 peut ainsi être mis en place par une simple poussée, à la fin de laquelle il vient se clipper de façon irréversible dans le trou borgne 11. En conséquence, le témoin de démontage 4 est obligatoirement rompu lors d'un désassemblage des parties 2 et 3.

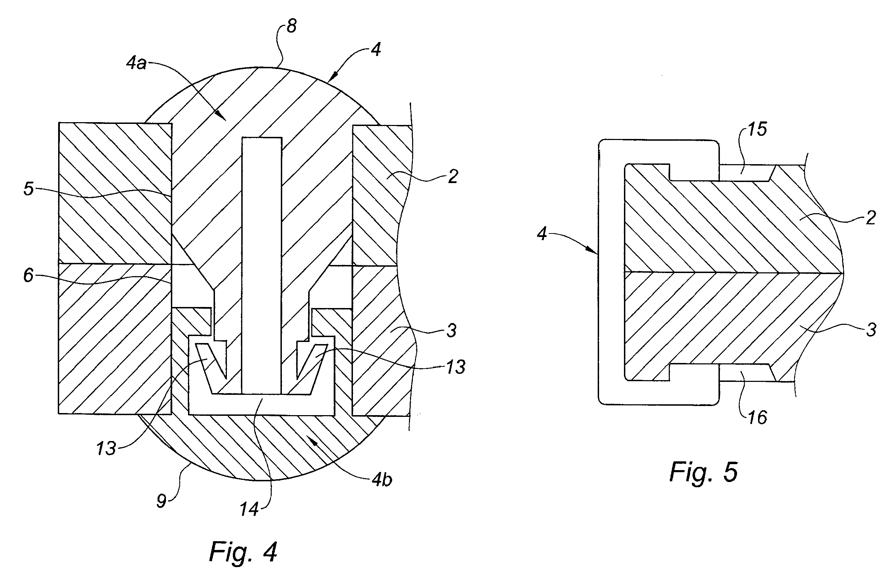

Alors que les formes de réalisation précédentes consistent en un témoin de démontage 4 d'un seul tenant, la figure 4 montre une troisième forme de réalisation, avec un témoin de démontage 4 composé de deux pièces 4a et 4b. Ce témoin de démontage 4 possède ici encore la forme générale d'une tige, introduite au travers de deux trous 5 et 6 coaxiaux et traversants ménagés respectivement dans les deux parties 2 et 3 assemblées.

La première pièce 4a est pourvue à son extrémité extérieure d'une tête 8 élargie, de forme bombée, appliquée sur la partie 2. La seconde pièce 4b est pourvue à son extrémité extérieure d'une tête 9 élargie, de forme bombée, appliquée sur l'autre partie 3.

Les deux pièces 4a et 4b sont réunies par clippage, la pièce 4a comportant des becs ou languettes 13 coopérant avec la paroi d'un évidement 14 de la pièce 4b. Lors de la mise en place du témoin de démontage 4, les deux pièces 4a et 4b sont ainsi réunies de manière irréversible par clippage.

En conséquence, lors d'un désassemblage des deux parties 2 et 3, les deux pièces 4a et 4b ne peuvent se séparer et l'une d'elles au moins se rompt, ce qui empêche toute remise en place.

Enfin, la figure 5 montre une quatrième forme de réalisation, dans laquelle le ou chaque témoin de démontage 4 vient coiffer, par l'extérieur, les bords adjacents des parties 2 et 3 assemblées. Le témoin de démontage 4 possède ici un profil en « C », lui permettant d'être retenu dans des évidements respectifs 15 et 16 des deux parties 2 et 3 assemblées. Ainsi, lors du désassemblage de ces deux parties 2 et 3, le témoin de démontage 4 soumis à de fortes contraintes se rompt et ne peut être remis en place.

Dans tous les cas, le témoin de démontage 4 est réalisable en matière plastique moulée. Décrit comme un élément unique, ce témoin de démontage 4 peut être multiple pour une zone d'assemblage donnée, ce qui renforce la protection de l'assemblage.

On ne s'éloignerait pas du cadre de l'invention, telle que définie dans les revendications, en modifiant la forme ou la matière constitutive de l'élément ruptible, ou en destinant le témoin de démontage à toute zone d'assemblage, réunissant des carters ou des parties autres d'un système de direction pouvant être lui-même de tout type.

## Revendications

1. Système de direction de véhicule automobile, comprenant au moins deux parties (2,3) normalement réunies l'une à l'autre dans une zone d'assemblage, **caractérisé en ce qu'**un témoin de démontage (4), sous la forme d'au moins un élément ruptible en cas de désassemblage des deux parties (2,3), est prévu dans la zone d'assemblage de ces deux parties.

2. Système de direction avec témoin de démontage selon la revendication 1, **caractérisé en ce que** le ou chaque témoin de démontage (4) est réalisé sous la forme d'une pièce, notamment d'allure cylindrique, insérée dans deux trous (5,6 ; 11) coaxiaux ou sensiblement coaxiaux ménagés respectivement dans les deux parties (2,3).

3. Système de direction avec témoin de démontage selon la revendication 2, **caractérisé en ce que** l'élément ruptible, constituant le témoin de démontage (4), est réalisé d'un seul tenant, avec une courte tige (7) passant au travers de trous traversants (5,6) coaxiaux ou sensiblement coaxiaux ménagés respectivement dans les deux parties (2,3) assemblées, la tige (7) étant pourvue à chacune de ses extrémités d'une tête (8,9) ou d'une butée de retenue (10).

4. Système de direction avec témoin de démontage selon la revendication 2, **caractérisé en ce que** l'élément ruptible, constituant le témoin de démontage (4), est réalisé d'un seul tenant, avec une courte tige (7) passant au travers d'un trou traversant (5) ménagé dans l'une (2) des parties assemblées, et introduite dans un trou de préférence borgne (11) ménagé dans l'autre partie assemblée (3), la tige (7) étant pourvue d'une tête (8) à son extrémité située du côté de la partie (2) pourvue du trou traversant (5), tandis que son extrémité (12) opposée est clippée dans le trou (11) de l'autre partie (3).

5. Système de direction avec témoin de démontage selon la revendication 1, **caractérisé en ce que** l'élément ruptible, constituant le témoin de démontage (4), est composé de deux pièces complémentaires (4a, 4b) coaxiales, réunies par clippage au travers de deux trous traversants (5, 6) coaxiaux ménagés respectivement dans les deux parties (2,3) assemblées, chacune des deux pièces (4a, 4b) constitutives du témoin étant pourvue d'une tête (8, 9) à son extrémité extérieure.

6. Système de direction avec témoin de démontage selon la revendication 1, **caractérisé en ce que** l'élément ruptible, constituant le témoin de démontage (4), est constitué par au moins une pièce coiffant, complètement ou partiellement, les zones extérieures respectives des deux parties (2,3) assemblées.

7. Système de direction avec témoin de démontage selon la revendication 6, **caractérisé en ce que** le témoin de démontage (4) possède un profil en « C », lui permettant d'être retenu dans des évidements respectifs (15,16) des deux parties (2,3) assemblées.

8. Système de direction avec témoin de démontage selon l'une des revendications 1 à 7, **caractérisé en ce que** le témoin de démontage (4) est réalisé en matière plastique moulée.

9. Système de direction selon l'une des revendications 1 à 8, **caractérisé en ce que** le témoin de démontage (4) est utilisé dans la zone d'assemblage de deux parties (2,3) de carter du système de direction, ces deux parties comportant des brides annulaires respectives qui sont accolées l'une à l'autre et par lesquelles elles sont assemblées l'une à l'autre.

## Patentansprüche

1. System zur Lenkung eines Kraftfahrzeugs, umfassend mindestens zwei Teile (2, 3), die normalerweise in einem Montagebereich miteinander verbunden sind, **dadurch gekennzeichnet, dass** eine Demontageanzeige (4) in Form mindestens eines Elements, das im Fall einer Demontage der zwei Teile (2, 3) zerbrochen werden kann, im Montagebereich dieser zwei Teile vorgesehen ist.

2. System zur Lenkung mit Demontageanzeige nach Anspruch 1, **dadurch gekennzeichnet, dass** die oder jede Demontageanzeige (4) in Form eines Werkstücks, insbesondere zylindrischen Aussehens, durchgeführt wird, eingeführt in zwei koaxiale oder im Wesentlichen koaxiale Löcher, (5, 6; 11), die jeweils in den zwei Teilen (2, 3) angeordnet sind.

3. System zur Lenkung mit Demontageanzeige nach Anspruch 2, **dadurch gekennzeichnet, dass** das zerbrechbare Element, das die Demontageanzeige (4) darstellt, einstückig hergestellt ist, wobei ein kurzer Schaft (7) durch koaxiale oder im Wesentlichen koaxiale Durchgangslöcher (5, 6) verläuft, die jeweils in den zwei montierten Teilen (2, 3) angeordnet sind, wobei der Schaft (7) an jedem seiner Enden mit einem Kopf (8, 9) oder mit einem Rückhalteanschlag (10) versehen ist.

4. System zur Lenkung mit Demontageanzeige nach Anspruch 2, **dadurch gekennzeichnet, dass** das zerbrechbare Element, das die Demontageanzeige (4) darstellt, einstückig hergestellt ist, wobei ein kurzer Schaft (7) durch ein Durchgangsloch (5) verläuft, das in einem (2) der montierten Teile angeordnet ist, und eingeführt in ein vorzugsweise blindes Loch (11), das in dem anderen montierten Teil (3) angeordnet ist, wobei der Schaft (7) an seinem Ende, das an der Seite des Teils (2), der mit dem Querloch (5) versehen ist, liegt, mit einem Kopf (8) versehen ist, während sein gegenüber liegendes Ende (12) im Loch (11) des anderen Teils (3) Clipbefestigt ist.

5. System zur Lenkung mit Demontageanzeige nach Anspruch 1, **dadurch gekennzeichnet, dass** das zerbrechbare Element, das die Demontageanzeige (4) darstellt, aus zwei koaxialen komplementären Werkstücken (4a, 4b) zusammengesetzt ist, die durch Clip-Befestigung durch zwei koaxiale Querlöcher (5, 6) verbunden sind, die jeweils in den zwei montierten Teilen (2, 3) angeordnet sind, wobei jedes der zwei Werkstücke (4a, 4b), aus denen die Anzeige besteht, an ihrem äußeren Ende mit einem Kopf (8, 9) versehen ist.

6. System zur Lenkung mit Demontageanzeige nach Anspruch 1, **dadurch gekennzeichnet, dass** das zerbrechbare Element, das die Demontageanzeige (4) darstellt, aus mindestens einem Werkstück besteht, das vollständig oder teilweise die jeweiligen äußeren Bereiche der zwei montierten Teile (2, 3) abdeckt.

7. System zur Lenkung mit Demontageanzeige nach Anspruch 6, **dadurch gekennzeichnet, dass** die Demontageanzeige (4) ein C-förmiges Profil aufweist, das ihr ermöglicht, dass sie in entsprechenden Aussparungen (15, 16) der zwei montierten Teile (2, 3) zurückgehalten wird.

8. System zur Lenkung mit Demontageanzeige nach einem der Ansprüche 1 bis 7, **dadurch gekennzeichnet, dass** die Demontageanzeige (4) aus einem geformten Plastikmaterial hergestellt ist.

9. System nach einem der Ansprüche 1 bis 8, **dadurch gekennzeichnet, dass** die Demontageanzeige (4) im Montagebereich der zwei Teile (2, 3) des Gehäuses des Lenkungssystems verwendet wird, wobei diese zwei Teile jeweilige ringförmige Flansche umfassen, die aneinander geheftet sind, und durch die sie miteinander verbunden sind.

## Claims

1. A steering system of motor vehicle, comprising at least two parts (2, 3) usually joined together in an assembling region, **characterized in that** a dismounting indicator (4), in the form of at least one breakable member in case of disassembling the two parts (2, 3), is provided in the assembling region of these two parts.

2. The steering system with dismounting indicator according to claim 1, **characterized in that** the dismounting indicator (4) or each dismounting indicator (4) is shaped as a single piece, particularly of cylindrical aspect, inserted in two coaxial or substantially coaxial holes (5, 6; 11) arranged respectively in the two parts (2, 3).

3. The steering system with dismounting indicator according to claim 2, **characterized in that** the breakable member, constituting the dismounting indicator (4), is formed integrally with a short pin (7) crossing coaxial or substantially coaxial through holes (5, 6) arranged respectively in the two assembled parts (2, 3), the pin (7) being provided, at each of the ends thereof, with a head (8, 9) or a retaining abutment (10).

4. The steering system with dismounting indicator according to claim 2, **characterized in that** the breakable member, constituting the dismounting indicator (4), is formed integrally with a short pin (7) crossing a through hole (5) arranged in one (2) of the assembling parts, and introduced into a preferably blind hole (11) arranged in the other assembling part (3), the pin (7) being provided with a head (8) at its end located on the side of the part (2) provided with the through hole (5), while its opposite end (12) is clipped into the hole (11) of the other part (3).

5. The steering system with dismounting indicator according to claim 1, **characterized in that** the breakable member, constituting the dismounting indicator (4), is comprised of two coaxial complementary pieces (4a, 4b), joined by being clipped together through two coaxial through holes (5, 6) arranged respectively in the two assembled parts (2, 3), each of the two pieces (4a, 4b) constituting the indicator being provided with a head (8, 9) at its external end.

6. The steering system with dismounting indicator according to claim 1, **characterized in that** the breakable member, constituting the dismounting indicator (4), is comprised of at least one piece entirely or partially capping the respective outer regions of the two assembled parts (2, 3).

7. The steering system with dismounting indicator according to claim 6, **characterized in that** the dismounting indicator (4) has a "C"-shaped profile, allowing it to be retained in respective recesses (15, 16) of the two assembled parts (2, 3).

8. The steering system with dismounting indicator according to any of claims 1 to 7, **characterized in that** the dismounting indicator (4) is made of a molded plastic material.

9. The steering system according to any of claims 1 to 8, **characterized in that** the dismounting indicator (4) is used in the assembling region of two parts (2, 3) of a casing of the steering system, these two parts including respective annular flanges which are adjoined to one another and whereby they are assembled to one another.
